# EUROPÄISCHE PATENTSCHRIFT

(11) **EP 1 030 081 B1**
(45) Veröffentlichungstag und Bekanntmachung des Hinweises auf die Patenterteilung: **22.08.2001**
(21) Anmeldenummer: 99103032.1
(22) Anmeldetag: 16.02.1999
(51) Int. Cl.: F16H 37/02

(54) **Planetenrad-Wendegetriebe mit einer Kupplungsanordnung in einem stufenlos regelbaren Kegelscheiben-Umschlingungsgetriebe**
Planetary reverse gearing and its clutch arrangement in a continuously variable transmission of the belt and pulley type
Train inverseur de type epicycloidal et son agencement d'embrayage dans une transmission variable continûment à poulies et courroie

(43) Veröffentlichungstag der Anmeldung: 23.08.2000
(73) Patentinhaber: Ford Global Technologies, Inc., A subsidiary of Ford Motor Company, Dearborn, Michigan 48126 (US)
(72) Erfinder: Kirchhoffer, Johann, 50737 Köln (DE); Wehren, Wihelm, 50171 Kerpen/Blatzheim (DE); Sastrarahardja, Paulus, 53945 Blankenheim (DE); Lauscher, Friedel, 52372 Kreuzau-Drove (DE)
(74) Vertreter: Messulam, Alec Moses

(56) Entgegenhaltungen:
- EP-A- 0 109 001
- EP-A- 0 864 778
- US-A- 5 607 371

## Beschreibung

Die Erfindung bezieht sich auf ein Planetenrad-Wendegetriebe mit einer Kupplungsanordnung in einem stufenlos regelbaren Kegelscheiben-Umschlingungsgetriebe der im Oberbegriff des Patentanspruches 1 erläuterten Art.

Aus der EP 0 109 001, das die Merkmale des Oberbegriffes des Anspruchs 1 zeigt, ist eine Kupplungsanordnung für ein Planetenrad-Wendegetriebe in einem stufenlos regelbaren Kegelscheiben-Umschlingungsge-triebe bekannt, das im wesentlichen innerhalb des Umfanges eines eine Kegelscheibenanordnung auf einer Primärwelle verstellenden Betätigungsservos, bestehend aus einem feststehenden Kolben und einem verschiebbaren Zylinder angeordnet ist.

Der Planetenräderträger des Planetenrad-Wendegetriebes ist hierbei mit einer Eingangswelle treibend verbunden und die untereinander in Eingriff stehenden zwei Sätze von Planetenrädern stehen einerseits mit einem Sonnenrad und andererseits mit einem Ringrad in Eingriff, wobei das Sonnenrad mit einer Primärwelle des stufenlos regelbaren Kegelscheiben-Umschlingungsgetriebes treibend verbunden ist, der Planetenräderträger über eine erste Reibscheibenkupplung mit einem feststehenden Kolben eines Betätigungsservos für die Verstellung der Kegelscheibenanordnung auf der Primärwelle zum Schalten eines Vorwärtsgangbereiches verbindbar ist und das Ringrad über eine zweite Reibscheibenkupplung am Getriebegehäuse zum Schalten eines Rückwärtsgangbereiches festlegbar ist.

Die Betätigungsanordnung für die erste Reibscheibenkupplung in Form einer Zylinder/Kolben-Anordnung ist hierbei dem feststehenden Kolben des Betätigungsservos für die Verstellung der Kegelscheibenanordnung auf der Primärwelle zugeordnet und die Betätigungsanordnung für die zweite Reibscheibenkupplung in Form einer Zylinder/Kolben-Anordnung ist im Getriebegehäuse angeordnet.

Die beiden Sätze von Reibscheiben sowohl der ersten Reibscheibenkupplung als auch der zweiten Reibscheibenkupplung sind auf einem verhältnismäßig großen Durchmesser radial außerhalb des Planetenradsatzes angeordnet.

Die bekannte Kupplungsanordnung, die in dieser Form in Groß-Serien-Anwendung bei Kraftfahrzeugen der unteren Leistungsklasse war, wies nachfolgende Merkmale auf, die einer Ausdehnung des Anwendungsbereiches auf eine höhere Leistungsklasse hindernd entgegenstanden.

Durch die Anordnung der Reibscheiben der Reibscheibenkupplungen auf einen großen Durchmesser ergab sich bereits bei Leerlaufdrehzahl einer Brennkraftmaschine durch den relativ hohen Fliehkraftdruck eine erhöhte Kapazität der Reibscheibenkupplungen, wodurch eine zusätzliche erhebliche Neigung des Kraftfahrzeuges zum Kriechen hervorgerufen wurde, was gleichzeitig mit einer entsprechenden Erwärmung der Reibscheiben und einer entsprechenden Erhöhung des Verschleisses der Reibscheiben einherging. Diese zusätzliche Kriechneigung machte eine erhöhte Bremskraft am Bremspedal erforderlich, um das Fahrzeug im Stillstand zu halten.

Weiterhin wies die bekannte Kupplungsanordnung den Nachteil auf, daß ihr Einrückverhalten durch eine unerwünschte Verzögerung und Einrückhärte gekennzeichnet war, die sich aus dem Fehlen einer entsprechenden Dämpfungsanordnung ergab.

Darüber hinaus war das Ringrad des Planetenradsatzes nicht sauber zentriert gelagert, so daß es insbesondere beim Schalten des Rückwärtsgangbereiches zu einer störenden Geräuschentwicklung kam.

Insbesondere die Tendenz der bekannten Kupplungsanordnung nach einer Laufleistung von ca. 15000 km bereits bei Leerlaufdrehzahl der Brennkraftmaschine zu einer erheblichen Zunahme des Schlupfmomentes zu neigen, was infolge der Abnahme der Rückstellfederrate der eingebauten Tellerfeder an den Reibscheiben noch erheblich zunahm, führte dazu, daß beim Starten der Brennkraftmaschine bei niedriger Temperatur oder normaler Umgebungstemperatur bereits ein Schlupfmoment aufgebaut wurde, das z.B. bei durch die angezogene Handbremse im Stand festgehaltenen Kraftfahrzeug zu einem Abwürgen der Brennkraftmaschine geführt hat.

Darüber hinaus war der Betätigungsdruck der Reibscheibenkupplungen in Hinblick auf den großen Außendurchmesser verhältnismäßig niedrig angesetzt, wodurch es schwierig war, die Anlegesteuerung der Reibscheibenkupplungen innerhalb der geringen zur Verfügung stehenden Druckdifferenz genau zu kontrollieren.

Weiterhin führte der geringe zur Verfügung gestellte Druck auch zu einer mangelhaften Versorgung der Reibscheiben mit dem zur Schmierung und Kühlung innerhalb des Getriebegehäuses zirkulierenden Druckmittels.

Die Aufgabe der Erfindung ist es, ein Planetenrad-Wendegetriebe mit einer Kupplungsanordnung in einem stufenlos regelbaren Kegelscheiben-Umschlingungsgetriebe, der im Oberbegriff des Patentanspruches 1 erläuterten Art derart zu verbessern, daß es unter Einhaltung des gegebenen Einbauraumes derart modifiziert wird, daß die aufgezeigten Nachteile vermieden werden und eine Anwendung auch in einer höheren Leistungsklasse ermöglicht wird.

Gemäß der Erfindung wird diese Aufgabe gelöst, indem bei einem Planetenrad-Wendegetriebe mit einer Kupplungsanordnung in einem stufenlos regelbaren Kegelscheiben-Umschlingungsgetriebe, der im Oberbegriff des Patentanspruches 1 erläuterten Art die im Kennzeichenteil des Patentanspruches 1 aufgezeigten Merkmale angewendet werden.

In den weiteren Patentansprüchen sind weitere zweckmäßige Verbesserungen der erfindungsgemäßen Kupplungsanordnung aufgezeigt.

Dadurch, daß der Planetenräderträger über zwei Radial-Nadellager an der Primärwelle und im Getriebegehäuse und über ein Axial-Gleitlager am Getriebegehäuse in einer sauberen 3-Punkt-Anordnung abgestützt ist, die Reibscheiben der ersten Reibscheibenkupplung zwischen einem am Planetenräderträger ausgebildeten zylindrischen Korbteil und der verlängerten Nabe des am feststehenden Kolben des Betätigungsservos festgelegten Sonnenrades auf einem geringeren Durchmesser angeordnet sind und die Betätigungsanordnung der ersten Reibscheibenkupplung in Form einer Zylinder/Kolbenanordnung in einem radialen Flanschteil an der Nabe des Sonnenrades angeordnet bzw. ausgebildet ist, wird eine kompakt bauende Reibscheibenanordnung mitsamt ihrer Betätigungseinrichtung mit geringerer Beeinflussung durch die Fliehkraft und durch Fertigungstoleranzen und mit geringerem Schlupfmoment erhalten.

Dadurch, daß das Ringrad über ein Radial-Nadellager auf einem Absatz am Planetenräderträger zentriert gelagert ist und axial über ein Axial-Nadellager am Getriebegehäuse abgestützt ist, wird einerseits eine gute Zentrierung und andererseits eine kontrollierte Steuerung des Schmiermittelflusses zu den Reibscheiben der zweiten Reibscheibenkupplung erzielt.

Dadurch, daß die Betätigungskolben sowohl der ersten als auch der zweiten Reibscheibenkupplung mit in Ringnuten eingesetzten Dämpfungswülsten aus elastomerem Material versehen sind oder Rückstellfedern in Form von einer Anzahl am Umfang angeordneter linearer Schraubendruckfedern aufweisen, wird eine gewünschte Linearität der Einrückbewegung in Zusammenhang mit einer progressiven Dämpfung oder linearen Dämpfung erzielt .

Die Erfindung wird anhand eines in den beiliegenden Zeichnungen gezeigten Ausführungsbeispieles näher erläutert. Es zeigt:
- Fig. 1: einen vertikalen Teilschnitt durch den Bereich eines Planeten rad-Wendegetriebes mit einer Kupplungsanordnung in einem stufenlos regelbaren Kegelscheiben-Umschlingungsgetriebe;
- Fig. 2: einen weiteren vertikalen Teilschnitt durch den Bereich einer weiteren Ausführungsform eines Planetenrad-Wendegetriebes mit einer Kupplungsanordnung in einem stufenlos regelbaren Kegelscheiben-Um-schlingungsgetriebe mit einer mittleren Drehmomentkapazität;
- Fig. 3: einen weiteren vertikalen Teilschnitt durch den Bereich einer Weiteren Ausführungsform eines Planetenrad-Wendegetriebes mit einer Kupplungsanordnung in einem stufenlos regelbaren Kegelscheiben-Um-schlingungsgetriebe mit einer niedrigen Drehmomentkapazität und
- Fig. 4: ein Einrückdiagramm des Druckanstieges über der Zeit aus dem das erfindungsgemäße abgedämpfte Einrückverhalten der neuen Kupplungsanordnung ersichtlich wird.

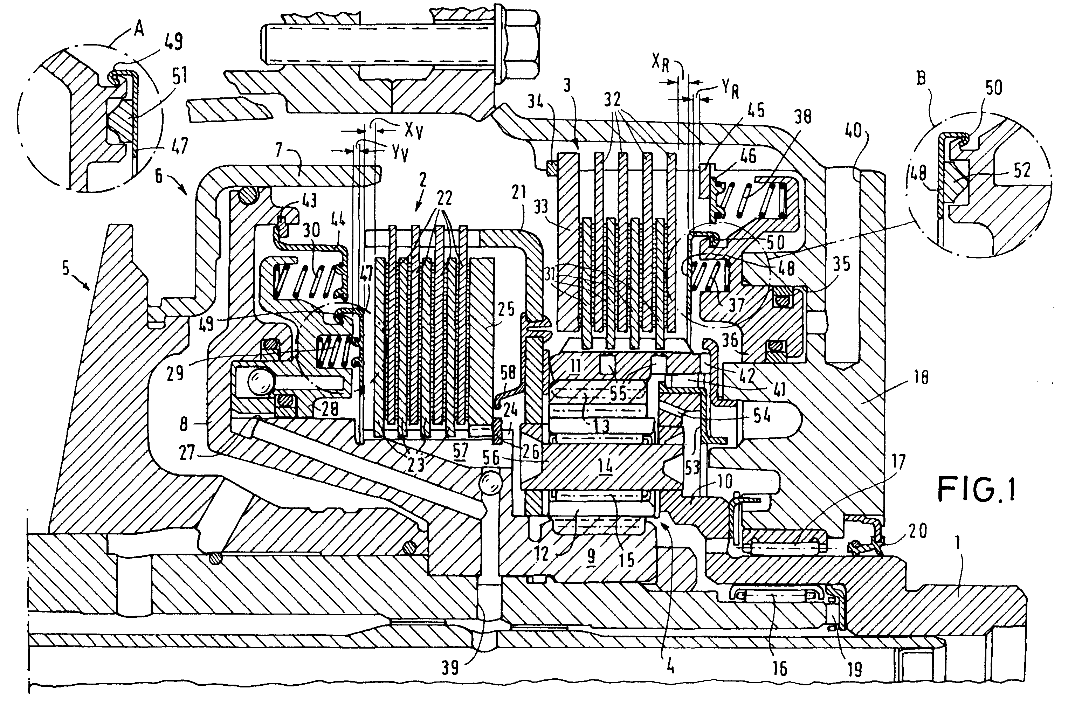

In den Figuren 1 bis 3 sind übereinstimmende Bauteile des Planetenrad-Wendegetriebes mit einer Kupplungsanordnung in einem stufenlos regelbaren Kegelscheiben-Umschlingungsge-triebe mit den gleichen Bezugszeichen versehen, und lediglich diejenigen Bauteile, die von den Bauteilen in Fig. 1 abweichen, sind mit entsprechenden Strich- bzw. Doppelstrich-Indices versehe

In den Figuren 1 bis 3 sind jeweils vertikale Teilschnitte durch den oberen Bereich eines Planetenrad-Wendegetriebes mit einer Kupplungsanordnung in einem stufenlos regelbaren Kegelscheiben-Umschlingungsgetriebe gezeigt, das im wesentlichen dem Wendegetriebe entspricht, das aus der EP 0 109 001 bekannt ist und das bereits in vielen zigtausend Exemplaren in der Groß-Serie produziert wurde.

Es werden dementsprechend nachfolgend nur diejenigen Teile der Kupplungsanordnung des Wendegetriebes bezeichnet, die für die vorliegende Erfindung wesentlich sind.

Eine Eingangswelle 1 ist über eine Vorwärtsgangkupplung 2 und über eine Rückwärtsgangkupplung 3 wahlweise in einen Vorwärts- bzw. Rückwärtsfahrbereich schaltbar.

Die Vorwärtsgangkupplung 2 und die Rückwärtsgangkupplung 3 wirken auf ein Planetenräder-Wendegetriebe 4 ein, das einem stufenlos regelbaren Umschlingungsgetriebe 5, von dem nur ein Teil der Primärwelle und der Primärscheibe gezeigt ist, vorgeschaltet ist. Gezeigt ist hierbei die verstellbare Primärscheibe, die über eine Stelleinrichtung 6 in Form einer Zylinder/Kolben-Anordnung 7/8 ausgebildet ist. Der Zylinder 7 ist hierbei mit der beweglichen Kegelscheibe der Verstelleinrichtung 6 verbunden, während der Kolben 8 feststehend angeordnet ist.

Das Planetenräder-Wendegetriebe 4 besteht in an sich bekannter Weise aus einem Sonnenrad 9, das fest mit der Primärwelle des stufenlos regelbaren Kegelscheiben-Umschlingungsgetriebes verbunden ist, einem Planetenradträger 10, der treibend mit der Eingangswelle 1 des Getriebes verbunden ist und aus einem Ringrad 11, an dem die Rückwärtsgangkupplung 3 angreift. Im Planetenradträger 10 sind zwei Sätze 12 und 13 von miteinander und mit dem Sonnenrad 9 und dem Ringrad 11 in Eingriff stehenden Planetenrädern in bekannter Weise auf Planetenradbolzen 14 über Nadellager 15 drehbar gelagert angeordnet.

Die Eingangswelle 1 kann hierbei mit dem Planetenradträger 10 verbunden sein oder mit diesem als ein Bauteil ausgebildet sein und sie ist über ein inneres Nadellager 16 an der Primärwelle des stufenlos regelbaren Kegelscheiben-Umschlingungsgetriebes und über ein äußeres Nadellager 17 im Getriebegehäuse 18 in radialer Richtung abgestützt und über ein Axial-Nadellager 19 in axialer Richtung positioniert und über einen Wellendichtring 20 abgedichtet.

Der feststehende Kolben 8 der Stelleinrichtung 6 für die verstellbare Kegelscheibe auf der Primärwelle des stufenlos regelbaren Kegelscheiben-Umschlingungsgetriebes ist mit dem Sonnenrad 9 des Planetenrad-Wendegetriebes 4 fest verbunden oder mit diesem einstückig ausgeführt, das ebenso drehfest mit der Primärwelle des stufenlos regelbaren Kegelscheiben-Umschlingungsgetriebes verbunden ist und somit das Eingangsglied für das stufenlos regelbare Kegelscheiben-Umschlingungsgetriebes bildet.

Die Vorwärtsgangkupplung 2 des Wendegetriebes 4 wird durch ein mit dem Planetenradträger 10 fest verbundenes Korbbauteil 21 gebildet, das an seinem Innenumfang eine Vielzahl von Reibscheiben 22 gegen Drehung formschlüssig festgelegt und axial verschiebbar aufnimmt, die mit entsprechenden Reibscheiben 23 in Eingriff gebracht werden können, deren Innenumfang an einem Nabenbauteil 24 des Sonnenrades 9 bzw. des feststehenden Kolbens 8 gegen Drehung festgelegt und axial verschiebbar angeordnet sind.

Um die Reibscheiben 22 und 23 in drehmomentübertragenden Reibungsschluß bringen zu können, ist am Nabenbauteil 24 eine Gegenhalteplatte 25 über einen Sprengring 26 axial festgelegt und auf der anderen Seite der Reibscheibenanordnung 22/23 ist eine Betätigungseinrichtung in Form eines in einem Zylinder 27 im Kolben 8 verschiebbaren Kolben 28 vorgesehen, der gemäß der Erfindung mit einer Einrück-Dämpfungsanordnung 29 und einer Rückstellanordnung 30 in Form von Druckfederspeichem versehen ist.

In ähnlicher Weise ist die Rückwärtsgangkupplung 3 ausgebildet, d.h., sie besteht aus einer Anzahl von am Außenumfang des Ringrades 11 drehfest angeordneten axial verschiebbaren Reibscheiben 31, die zwischen entsprechenden Reibscheiben 32 liegen, die am Gehäuse 18 drehfest und axial verschiebbar angeordnet sind. Um die Reibscheiben 31 und 32 in drehmomentübertragenden Reibungseingriff bringen zu können, ist eine Gegendruckplatte 33 über einen Sprengring 34 axial festgelegt und gegenüberliegend ist eine Betätigungseinrichtung in Form eines im Gehäuse 18 ausgebildeten Zylinders 35, in dem ein verschiebbarer Kolben 36 angeordnet ist, der mit einer Einrück-Dämpfungsanordnungen 37 und einer Rückstellanordnung 38 in Form von Druckfederanordnungen versehen ist.

Die Beaufschlagung der beiden Betätigungseinrichtungen für die Vorwärtsgangkupplung 2 und die Rückwärtsgangkupplung 3 kann über entsprechend zweckmäßig angeordnete Druckmittelkanäle 39 und 40 in durch das hydraulische Steuerventilsystem gesteuerter Weise erfolgen.

Der grundsätzliche Aufbau des Planetenrad-Wendegetriebes mit einer Kupplungsanordnung in einem stufenlos regelbaren Kegelscheiben-Umschlingungsgetriebe ist bekannt und Aufgabe der Erfindung ist es, eine solche Kupplungsanordnung derart zu verbessern, daß das entsprechende Anfahrverhalten im Vorwärts- als auch im Rückwärtsgangbereich wesentlich verbessert wird.

Eine erste Verbesserung ergibt sich dadurch, daß die miteinander zusammenwirkenden Reibscheiben 22 und 23 auf geringerem radialen Durchmesser zwischen einem Korbbauteil 21 am Planetenradträger 10 und einem Nabenbauteil 24 am Sonnenrad 9 angeordnete sind. Dadurch wird die Neigung der Reibscheiben, durch Fliehkraftdruckaufbau zum Einrücken und die Neigung zum Aufbau von Schlupfmoment bereits in vorteilhafter Weise reduziert.

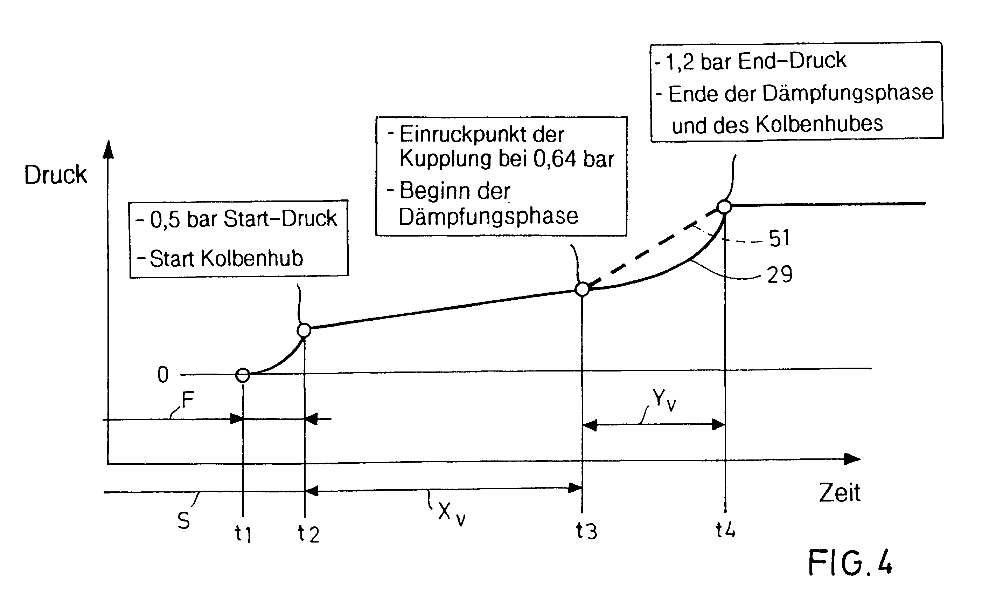

Durch die Anordnung von einer Einrück-Dämpfanordnung 29 am Kolben 28 der Betätigungseinrichtung werden während der Beaufschlagung des Druckraumes im Zylinder 27 Kraft- und Bewegungsverhältnisse erzielt, wie sie später im Zusammenhang mit der Erläuterung des Einrückdiagrammes in der Fig. 4 noch näher erläutert werden.

Zur Verbesserung der Funktion der Rückwärtsgangkupplung 3 wurde zwischen einer Schulter des Planetenradträgers 10 und dem Ringrad 11 ein Radial-Nadellager 41 angeordnet und das Ringrad 11 wird weiterhin über ein Axial-Nadellager 42 am Gehäuse 18 abgestützt. Dadurch können Geräusche, die beim Umlauf des Planetenräder-Wendegetriebes bisher entstanden sind, weitgehend verringert werden.

Die weitere Verbesserung des Einrückverhaltens sowohl der Vorwärtsgangkupplung 2 als auch der Rückwärtsgangkupplung 3 wird durch die den Kolben 28 bzw. 36 zugeordneten Rückstellfeder- bzw. Dämpfungsanordnungen 29 und 30 bzw. 37 und 38 bereitgestellt, die jeweils aus einer ersten Druckfeder 30 bzw. 38 bestehen, die sich an einem über einen Sprengring 43 abgestützten Stützring 44 bzw. einem Sprengring 45 und einem Stützring 46 abstützen und eine anfängliche Einrückbewegung des Kolbens 27 bzw. 36 entsprechend abdämpfen. Die zweiten Federanordnungen 29 bzw. 37 kommen erst zur Wirkung wenn der Kolben 28 bzw. 36 mit einer Druckplatte 47 bzw. 48 auf die Reibscheiben 23 bzw. 32 einwirkt und die entsprechenden Federanordnungen 29 und 37 zusammengedrückt werden.

Die Druckplatten 47 und 48 sind hierbei über Haken 49 und 50 am Kolben 28 bzw. 36 verrastet.

Alternativ zu den Federanordnungen 29 und 37 kann an den Andruckplatten 47 und 48 je ein Ringwulst 51 bzw. 52 aus elastomerem Material angeordnet werden, der die entsprechende Federfunktion für die zweite Dämpfungsstufe übernimmt.

Zusätzlich zu den vorgesehenen Dämpfungsanordnungen wurde besonderen Wert darauf gelegt, daß die Schmiermittelzufuhr zu den Reibscheiben 31/32 der Rückwärtsgangkupplung 3 als auch der Reibscheiben 22/23 der Vorwärtsgangkupplung 2 derart verbessert wurde, daß für eine gleichmäßige Anströmung der Reibscheiben zur Kühlung Maßnahmen getroffen wurden.

Diese Maßnahmen bestehen im Falle der Rückwärtsgangkupplung 3 darin, daß über einen eigenen Schmiermittelkanal 53 und Kanälen 54 im Planetenradträger 10 das Planetenrad-Wendegetriebe 4 derart mit Schmiermittel versorgt wird, daß über im Ringrad angeordnete radiale Schmiermittelkanäle 55 die Reibscheiben 31/32 beaufschlagt werden können.

Über den Schmiermittelkanal 53 wird weiterhin über axiale Schmiermittelkanäle 46 im Planetenräderträger 10 Schmiermittel in den Bereich des Nabenbauteiles 24 geführt, von wo es über axiale Nuten 57 in radialer Richtung auf die Reibscheiben 22/23 zuströmen kann, wobei durch eine entsprechende Stauscheibe 58 benachbart der Gegenhalteplatte 25 ein radiales Abströmen unter Umgehung der Reibscheiben verhindert wird.

Die Funktionsweise der erfindungsgemäßen Einrück-Dämpfungsanordnung wird nachfolgend in Zusammenhang mit Fig. 1 und Fig. 4 näher erläutert.

In Fig. 1 ist im Bereich der Vorwärtsgangkupplung 2 das Einrückspiel des Kolbens 28 mit XV und der Dämpfungsweg mit YV angegeben. Ebenso ist im Bereich der Rückwärtsgangkupplung 3 der Einrückweg des Kolbens 36 mit XR und der Dämpfweg mit YR angegeben.

In Fig. 4 ist das Einrückdiagramm einer der beiden Kupplungen gezeigt, in dem der Druckverlauf über der Zeit aufgetragen ist.

Der Startdruck für das Einrücken der Kupplung liegt bei 0,5 bar und während der Zeit F wird zunächst nur der Zylinderraum 27 mit Druckmittel gefüllt. Sobald der Druckmittelraum 27 vollständig gefüllt ist, wird der Kolben 28 verschoben, wodurch zwi-schen der Zeit t1 und t2 eine Druckerhöhung auftritt und der Kolben 28 beginnt die Federanordnungen 30 gegen den Abstützring 44 zu drücken, wodurch bis zum Zeitpunkt t3 die Schiebephase des Kolbens 27 durchlaufen wird. Sobald die Andrückscheibe 47 gegen die erste der Reibscheiben 23 zur Anlage kommt, werden die Federn der zweiten Federanordnung 29 oder die elastomere Ringwulst 51 zusammengedrückt, wodurch sich in der Zeitspanne von t3 zu t4 die Dämpfungs- oder Akkumulationsphase der Kupplung einstellt.

Wie aus dem Verlauf der Druckerhöhung im Diagramm ersichtlich ist, wird für einen stetigen gleichmäßigen Druckanstieg während der Einrückphase der Kupplung gesorgt, so daß die erwünschte sanfte Übernahme der Drehmomentkapazität ohne Stoß und ohne Rupfen erreicht wird.

Diese Dämpfungsanordnung im Zusammenwirken mit der verbesserten Zufuhr von Schmiermittel zu den Reibscheiben sorgt für eine Verbesserung des Anfahrverhaltens ohne eine ruck- oder stoßartige Beschleunigung und sichert darüber hinaus durch eine Verringerung des Verschleißes an den Reibscheiben ein Beibehalten des erwünschten Anfahrverhaltens über die gesamte Lebensdauer der Kupplungsanordnung.

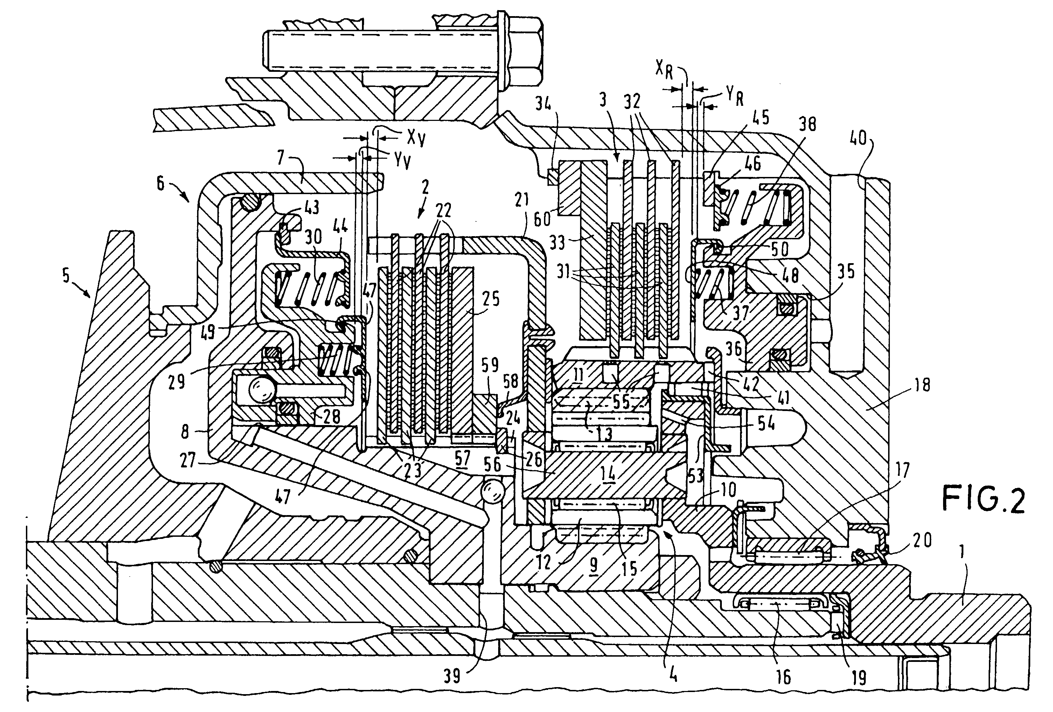

Die in Fig. 2 gezeigte Ausführungsform eines Planetenrad-Wendegetriebes mit einer Kupplungsanordnung unterscheidet sich im Aufbau nur unwesentlich von der Ausführungsform in Fig. 1 und dementsprechend sind die gleichen Bauteile mit den gleichen Bezugszeichen versehen.

Der wesentliche Unterschied liegt darin, daß diese Kupplungsanordnung für eine mittlere Drehmomentkapazität ausgelegt ist und dementsprechend eine geringere Anzahl von Reibscheibenpaaren 22/23 bzw. 31/32 aufweist.

Die Verkürzung der Baulänge des Reibscheibenstapels wird hierbei durch eingesetzte Distanzscheiben 59 bzw. 60 wettgemacht.

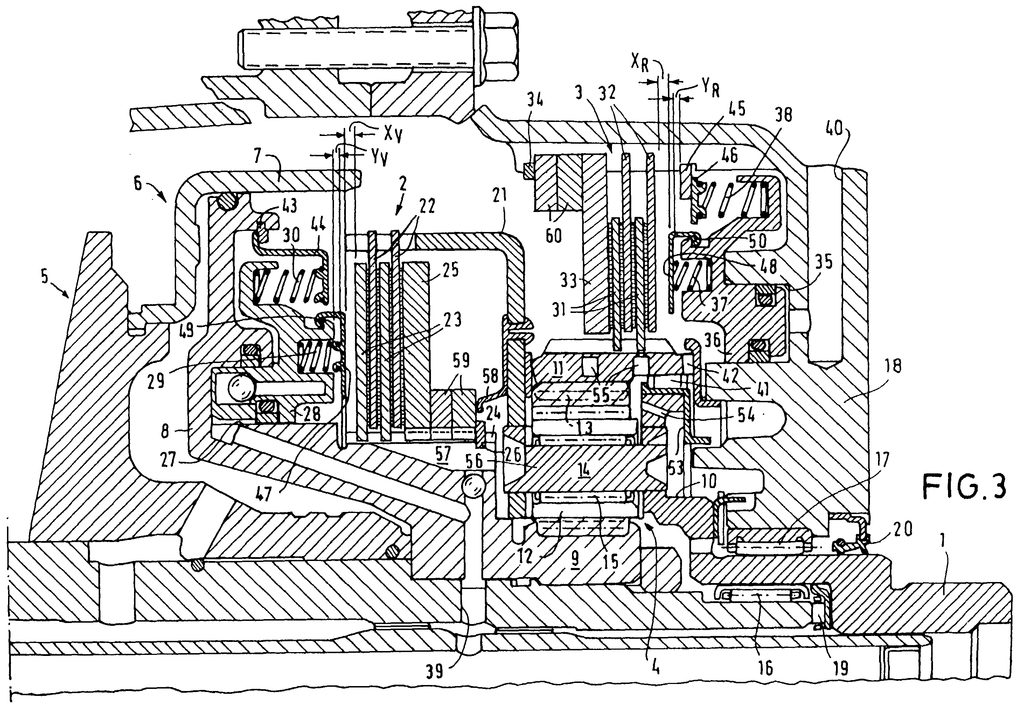

Die in Fig. 3 gezeigte Kupplungsanordnung stimmt wieder in allen wesentlichen Teilen mit der Kupplungsanordnung der Fig. 1 überein und dementsprechend sind die gleichen Bauteile mit gleichen Bezugszeichen versehen.

Der wesentliche Unterschied liegt lediglich darin, daß diese Kupplungsanordnung für eine niedrigere Drehmomentkapazität ausgelegt ist. Dementsprechend sind die Reibscheibenanordnungen 22/23 und 31/32 mit noch weniger Reibscheiben ausgestattet und die entsprechenden Abstände sind durch doppelte Distanzscheiben 59 und 60 ausgeglichen.

## Patentansprüche

1. Planetenrad-Wendegetriebe mit einer Kupplungsanordnung in einem stufenlos regelbaren Kegelscheiben-Umschlingungsgetriebe, wobei ein Planetenräderträger (10) mit einer Eingangswelle (1) treibend verbunden ist und zwei Sätze von untereinander in Eingriff stehenden Planetenrädern (12 und 13) aufweist, von denen ein Satz in Eingriff mit einem Sonnenrad (9) und der andere Satz in Eingriff mit einem Ringrad (11) stehen, wobei das Sonnenrad (9) mit einer Primärwelle des stufenlos regelbaren Kegelscheiben-Umschlingungsgetriebes treibend verbunden ist und der Planetenräderträger (10) über eine erste Reibscheibenkupplung (2) mit einem feststehenden Kolben (8) eines Betätigungsservos für die Verstellung der Kegelscheibenanordnung auf der Primärwelle zum Schalten eines Vorwärtsgangbereiches verbindbar ist und das Ringrad (11) über eine zweite Reibscheibenkupplung (3) am Getriebegehäuse (18) zum Schalten eines Rückwärtsgangbereiches festlegbar ist und die Reibscheiben (31) der zweiten Reibscheibenkupplung (3) auf einem verhältnismäßig großen Durchmesser radial außerhalb des Planetenradsatzes angeordnet sind,
**dadurch gekennzeichnet**, daß
- der Planetenräderträger (10) über zwei Radial-Nadellager (16 und 17) auf der Primärwelle und im Getriebegehäuse (18) sowie über ein Axial-Nadellager (42) am Getriebegehäuse(18) in nur drei Punkten abgestützt ist,
- die Reibscheiben (22) der ersten Reibscheibenkupplung (2) zwischen einem am Planetenräderträger (10) ausgebildeten zylindrischen Korbteil (21) und einem mit dem feststehenden Kolben (8) des Betätigungsservos verbundenen Nabenbauteil (24) des Sonnenrades (9) auf einem geringeren Durchmesser als die Reibscheiben (31) der zweiten Reibscheibenkupplung (3) angeordnet sind und
- die Betätigungseinrichtung für die erste Reibscheibenkupplung (2) in Form einer Zylinder/Kolben-Anordnung (27/28) in einem radialen Flanschteil an dem Nabenbauteil (24) des Sonnenrades (9) angeordnet oder ausgebildet ist.

2. Planetenrad-Wendegetriebe mit einer Kupplungsanordnung nach Anspruch 1,
**dadurch gekennzeichnet**, daß
- das Ringrad (11) über ein Radial-Nadellager (41 ) auf einem Absatz am Planetenräderträger (10) zentriert gelagert ist und
- das Ringrad (11) über ein Axial-Nadellager (42) am Getriebegehäuse (18) axial abgestützt ist, über das auch die Schmiermittelzufuhr zu den Reibscheiben der Reibscheibenkupplung kontrollierbar ist.

3. Planetenrad-Wendegetriebe mit einer Kupplungsanordnung nach den Ansprüchen 1 und 2,
**dadurch gekennzeichnet**, daß
- die Betätigungskolben (28 und 36) der ersten und zweiten Reibscheibenkupplungen (2 und 3) mit durch Stützringe (44 und 46) abgestützte Rückstellanordnungen (29 und 30) in Form von einer Anzahl von Schraubendruckfedem versehen sind und
- die Rückstellfedern für die Betätigungskolben (28 und 36) durch radial außerhalb in Form von einer Vielzahl von linearen Schraubendruckfedem (30 bzw. 38) angeordnet sind, wodurch diese für die Einrückbewegung eine Dämpfungsanordnung bilden.

4. Planetenrad-Wendegetriebe mit einer Kupplungsanordnung nach den Ansprüchen 1 bis 3,
**dadurch gekennzeichnet**, daß
- an den Betätigungskolben (28 und 36) der ersten und zweiten Reibscheibenkupplungen (2 und 3) die Dämpfungsanordnung (29 und 30) durch in Ringnuten an den Kolben (28 und 36) angeordnete Ringwulste (51 bzw. 52) aus elastomerem Material gebildet sind.

5. Planetenrad-Wendegetriebe mit einer Kupplungsanordnung nach den Ansprüchen 1 bis 4,
**dadurch gekennzeichnet**, daß
- zur Anpassung der Kupplungsanordnung an eine mittlere oder niedrige Drehmomentkapazität lediglich die Anzahl der Reibscheibenanordnungen (22/23 bzw. 31/32) im vorhandenen Bauraum verringert sind und der vorhandene Bauraum durch Einsetzen von Distanzscheiben (59 bzw. 60) unmittelbar zwischen die Andrückplatten (25 bzw. 33) und dem Sprengring (24 bzw. 34) ausgefüllt wird.

## Claims

1. Planetary reverse gearing and its clutch arrangement in a continuously variable transmission of the belt and pulley type, wherein a planet carrier (10) is connected with an input shaft (1) in a driving way and has two sets of planet gears (12 and 13) in engagement with one another, of which one set is in engagement with a sun gear (9) and the other set is in engagement with a ring gear (11), wherein the sun gear (9) is connected in a driving way with a primary shaft of the continuously variable transmission of the belt and pulley type and the planet carrier (10) can be connected via a first friction disc clutch (2) with a fixed piston (8) of an activation servo for the adjustment of the cone arrangement on the primary shaft for switching a forward gear area and the ring gear (11) can be fixed via a second friction disc clutch (3) on the gearbox (18) for the switching of a backward gear area and the friction discs (31) of the second friction disc clutch (3) are positioned on a relatively large diameter radially outside of the planet gear set
characterised in that
- the planet carrier (10) via two radial needle bearings (16) and (17) on the primary shaft and in the gearbox (18) as well as via an axial needle bearing (42) on the gearbox (18) is supported in only three points,
- the friction discs (22) of the first friction disc clutch (2) are positioned between a cylindrical basket component (21) formed on the planet carrier and a hub component (24) of the sun gear (9) connected with the fixed piston (8) of the activation servo on a smaller diameter than the friction discs (31) of the second friction disc clutch (3) and
- the activation device for the first friction disc clutch (2) is positioned or formed in the form of a cylinder/piston arrangement (27/28) in a radial flange component on the hub component (24) of the sun gear (9).

2. Planetary reverse gearing and its clutch arrangement according to Claim 1 characterised in that
- the ring gear (11) via an axial needle bearing (41) is positioned centred on a ledge on the planet carrier and
- the ring gear (11) is axially supported via an axial needle bearing (42) on the gearbox (18), via which also the lubricant supply to the friction discs of the friction disc clutch can be controlled.

3. Planetary reverse gearing and its clutch arrangement according to Claims 1 and 2
characterised in that
- the activation pistons (28 and 36) of the first and second friction disc clutches (2 and 3) are provided with return arrangements (29 and 20) supported through support rings (44 and 46) in the form of a number of helical compression springs and
- the return springs for the activation pistons (28 and 36) are positioned through radially outside in the form of a multitude of linear helical compression springs (30/38), wherein these form an attenuation arrangement for the gearing movement.

4. Planetary reverse gearing and its clutch arrangement according to the Claims 1 to 3
characterised in that
on the activation pistons (28 and 36) of the first and second friction disc clutches (2 and 3) the attenuation arrangements (29 and 30) are formed through ring beads (51/52) made from elastomer material positioned in ring grooves on the pistons (28 and 36).

5. Planetary reverse gearing and its clutch arrangement according to Claims 1 to 4
characterised in that
- for the adaptation of the clutch arrangement to a middle or low torque capacity, merely the number of friction disc arrangements (22/23, 31/32) in the available construction area are reduced and the available construction area is filled through insertion of distance discs (59/60) directly between the pressure plates (25/33) and the circlip (24/34).

## Revendications

1. Train inverseur de type épicycloïdal avec un embrayage dans une transmission à poulies et courroie variable continûment, sachant qu'un porte-satellites (10) est relié de façon menante à un arbre d'entrée (1) et présente deux jeux de satellites (12 et 13) en prise les uns avec les autres, dont un jeu est en prise avec un planétaire (9) et l'autre jeu avec une couronne (11), sachant que le planétaire (9) est relié de façon menante à un arbre primaire de la transmission à poulies et courroie réglable ou variable en continu et que le porte-satellites (10) peut être relié par le biais d'un premier embrayage à disques de friction (2) à un piston fixe (8) d'une servocommande pour le déplacement des poulies sur l'arbre primaire, afin de passer une marche avant, que la couronne (11) peut être immobilisée par le biais d'un second embrayage à disques de friction (3) sur le carter de la boîte de vitesses (18) pour passer une marche arrière, et que les disques de friction (31) du second embrayage à disques de friction (3) sont placés sur un diamètre relativement grand, radialement à l'extérieur du jeu de satellites, caractérisé en ce que
- le porte-satellites (10) ne prend appui qu'en trois points par l'intermédiaire de deux paliers à aiguilles radiaux (16 et 17) sur l'arbre primaire et dans le carter de protection des engrenages (18), ainsi que par le biais d'un palier à aiguilles axial (42) sur le carter de protection des engrenages (18),
- en ce que les disques de friction (22) du premier embrayage à disques de friction (2) sont disposés entre un panier cylindrique (21) réalisé sur le porte-satellites (10) et un moyeu (24) du planétaire (9) relié à un piston fixe (8) de la servocommande, sur un diamètre plus petit que les disques de friction (31) du second embrayage à disques de friction (3), et
- en ce que le dispositif d'actionnement pour le premier embrayage à disques de friction (2) est disposé ou réalisé en tant que dispositif à cylindre et piston (27/28) dans une bride radiale sur le moyeu (24) du planétaire (9).

2. Train inverseur de type épicycloïdal avec un embrayage selon la revendication 1, caractérisé en ce que
- la couronne (11) est montée de façon centrée par le biais d'un palier à aiguilles radial (41) sur un talon du porte-satellites (10), et
- en ce que la couronne (11) prend appui axialement sur le carter de protection des engrenages (18) par l'intermédiaire d'un palier à aiguilles axial (42) permettant de contrôler l'apport de lubrifiant aux disques de friction de l'embrayage à disques de friction.

3. Train inverseur de type épicycloïdal avec un embrayage selon les revendications 1 et 2, caractérisé en ce que
- les pistons d'actionnement (28 et 36) des premier et second embrayages à disques de friction (2 et 3) sont munis de dispositifs de rappel (29 et 30) prenant appui à l'aide de bagues d'appui (44 et 46), qui ont la forme de plusieurs ressorts cylindriques de compression, et
- en ce que les ressorts de rappel pour les pistons d'actionnement (28 et 36) sont disposés radialement à l'extérieur sous la forme d'un grand nombre de ressorts cylindriques de compression linéaires (30 ou 38) qui constituent pour le mouvement d'embrayage un dispositif d'amortissement.

4. Train inverseur de type épicycloïdal avec un embrayage selon les revendications 1 à 3, caractérisé en ce que les dispositifs d'amortissement (29 et 30) sur les pistons d'actionnement (28 et 36) des premier et second embrayages à disques de friction (2 et 3) sont formés par des tores (respectivement 51 et 52) en une matière élastomère logés dans des rainures annulaires sur les pistons (28 et 36).

5. Train inverseur de type épicycloïdal et son embrayage selon les revendications 1 à 4, caractérisé en ce que, pour adapter l'embrayage à un couple de rotation moyen ou faible, il suffit de réduire le nombre de jeux de disques de friction (22/23 et 31/32) dans l'espace existant et de les remplacer par des galets d'écartement (respectivement 59 et 60) directement entre les plaques de pression (respectivement 25 et 33) et la bague d'expansion (respectivement 24 et 34).
